# EUROPEAN PATENT SPECIFICATION

(11) **EP 3 874 161 B1**
(45) Date of publication and mention of the grant of the patent: **28.06.2023**
(21) Application number: 19878104.9
(22) Date of filing: 04.11.2019
(51) Int. Cl.: F03D 9/30, B63B 39/00, F03D 13/20, E02B 9/00, F03D 13/25, B63B 39/03, B63B 35/44

(54) **TUNED MASS DAMPER FOR FLOATING STRUCTURES**
ABGESTIMMTER MASSENDÄMPFER FÜR SCHWIMMENDE STRUKTUREN
AMORTISSEUR DE MASSE ACCORDÉ POUR STRUCTURES FLOTTANTES

(30) Priority: 02.11.2018 US 201862754699 P
(43) Date of publication of application: 08.09.2021
(73) Proprietor: University of Maine System Board of Trustees, Orono, ME 04469 (US)
(72) Inventor: ALLEN, Christopher, K., Orono, ME 04469 (US); VISELLI, Anthony, M., Orono, ME 04469 (US); GOUPEE, Andrew, J., Orono, ME 04469 (US); DAGHER, Habib, J., Orono, ME 04469 (US); LINDNER, Jeff, Orono, ME 04469 (US); TOWNSEND, John S., Orono, ME 04469 (US); WILLIAMS, Rebecca L., Orono, ME 04469 (US); GANT, Frederick S., Orono, ME 04469 (US); BERRY, Robert E., Orono, ME 04469 (US)
(74) Representative: Haseltine Lake Kempner LLP
(86) International application number: PCT/US2019/059628
(87) International publication number: WO 2020/093037

(56) References cited:
- CN-U- 202 783 720
- JP-A- 2019 508 313
- US-A- 3 635 182
- US-A- 3 678 877
- US-A- 4 226 554
- US-A1- 2011 037 264
- US-A1- 2012 121 413
- US-A1- 2014 079 548
- US-A1- 2014 339 828
- US-B1- 10 087 915
- US-B2- 8 057 127
- Zhang Zili, Et Al.: "Vibration Control of Floating Offshore Wind Turbines Using Liquid Column Dampers", Journal of Physics: Conference Series, 22 June 2018 (2018-06-22), pages 1-11, XP055716441,
- HE et al.: "Optimization Design of Tuned Mass Damper for Vibration Suppression of a Barge-Type Offshore Floating Wind Turbine", Institution of mechanical engineers, 15 June 2018 (2018-06-15), pages 302-315, XP055716446,
- TONG et al.: "Passive Vibration Control of an Offshore Floating Hydrostatic Wind Turbine Model", Wind Energy, vol. 21, no. 9, 28 April 2018 (2018-04-28) , pages 697-714, XP055716457,
- DING et al.: "Study on TMD Control on Stability Improvement of Barge-Supported Floating Offshore Wind Turbine Based on the Multi- Island Genetic Algorithm", China Ocean Engineering, vol. 33, no. 3, 11 November 2017 (2017-11-11), pages 309-321, XP036799417,
- Namik et al.: "A REVIEW OF FLOATING WIND TURBINE CONTROLLERS", Handbook of Wind Power Systems, 20 September 2015 (2015-09-20), pages 415-441, XP055716463,

## Description

### BACKGROUND

This invention relates in general to floating platforms. In particular, this invention relates to an improved floating offshore wind turbine (FOWT) platform having an improved tuned mass damper system to reduce motion and loading resulting from wind, current, and wave loading during operation.

Wind turbines for converting wind energy to electrical power are known and provide an alternative energy source for power companies. On land, large groups of wind turbines, often numbering in the hundreds of wind turbines, may be placed together in one geographic area. These large groups of wind turbines can generate undesirably high levels of noise and may be viewed as aesthetically unpleasing. An optimum flow of air may not be available to these land-based wind turbines due to obstacles such as hills, woods, and buildings.

Groups of wind turbines may also be located offshore, but near the coast at locations where water depths allow the wind turbines to be fixedly attached to a foundation on the seabed. Over the ocean, the flow of air to the wind turbines is not likely to be disturbed by the presence of various obstacles (i.e., as hills, woods, and buildings) resulting in higher mean wind speeds and more power. The foundations required to attach wind turbines to the seabed at these near-coast locations are relatively expensive, and can only be accomplished at relatively shallow depths, such as a depth of up to about 45 meters.

The U.S. National Renewable Energy Laboratory has determined that winds off the U.S. Coastline over water having depths of 30 meters or greater have an energy capacity of about 3,200 TWh/yr. This is equivalent to about 90 percent of the total U.S. energy use of about 3,500 TWh/yr. The majority of the offshore wind resource resides between 37 and 93 kilometers offshore where the water is over 60 meters deep. Fixed foundations for wind turbines in such deep water are likely not economically feasible. This limitation has led to the development of floating platforms for wind turbines. Known floating wind turbine platforms may be anchored to the seabed with mooring lines and provide some stability to the tower and turbine against external loading from wind, waves, and current, as well as loading associated with the dynamics of the wind turbine mounted thereon. Floating wind turbine platforms and the tower and turbine mounted thereon however, may still experience undesirable instability due to external loading from the wind, waves, and current Document JP 2019508313 A discloses a tuned mass damper system in combination with a floating offshore wind turbine platform comprising the features of the preamble of claim 1.

It would be desirable therefore to provide a FOWT platform with an improved tuned mass damper system to reduce motion and loading resulting from wind, current, and wave loading during operation.

### SUMMARY OF THE INVENTION

This invention relates to an improved tuned mass damper (TMD) system in combination with a floating offshore wind turbine (FOWT) platform as set out in claim 1 below. Optional features of the invention are set out in the dependent claims.

Various aspects of this invention will become apparent to those skilled in the art from the following detailed description of the preferred embodiment, when read in light of the accompanying drawings.

### BRIEF DESCRIPTION OF THE DRAWINGS

Fig. 1 is a perspective view of a FOWT platform with a wind turbine mounted thereon and having an improved tuned mass damper (TMD) system in accordance with this invention.
Fig. 2 is an enlarged view of a portion of the FOWT platform illustrated in Fig. 1, partially in cross-section.
Fig. 3 is an alternate cross-sectional view of the FOWT platform illustrated in Figs. 1 and 2.
Fig. 4 is a top plan view of a semi-submersible FOWT platform having a second embodiment of the improved TMD system in accordance with this invention.
Fig. 5 is a cross-sectional view taken along the line 5 - 5 of Fig. 4.
Fig. 6 is a top plan view of a tension leg FOWT platform having a third embodiment of the improved TMD system in accordance with this invention.
Fig. 7 is a cross-sectional view taken along the line 7 - 7 of Fig. 6.
Fig. 8 is a top plan view of a spar type FOWT platform having a fourth embodiment of the improved TMD system in accordance with this invention.
Fig. 9 is a cross-sectional view taken along the line 8-8 of Fig. 9.
Fig. 10 is an enlarged cross-sectional view of the second embodiment of the improved TMD system shown in Figs. 4 and 5.
Fig. 11 is an enlarged cross-sectional view of the third embodiment of the improved TMD system shown in Figs. 6 and 7.
Fig. 12 is an enlarged cross-sectional view of the fourth embodiment of the improved TMD system shown in Figs. 8 and 9.

### DETAILED DESCRIPTION OF THE PREFERRED EMBODIMENT

The present invention will now be described with occasional reference to the illustrated embodiments of the invention. This invention may, however, be embodied in different forms and should not be construed as limited to the embodiments set forth herein, nor in any order of preference. Rather, these embodiments are provided so that this disclosure will be more thorough, and will convey the scope of the invention to those skilled in the art.

The embodiments of the invention disclosed below generally provide improvements to various types of floating offshore wind turbine (FOWT) platforms, such as barge type platforms, submersible or semi-submersible type platforms, spar buoy type platforms, and tension leg type platforms. The invention includes a FOWT platform with an improved tuned mass damper system to reduce motion and loading during operation.

As used herein, the term parallel is defined as in a plane substantially parallel to the horizon. The term vertical is defined as substantially perpendicular to the plane of the horizon.

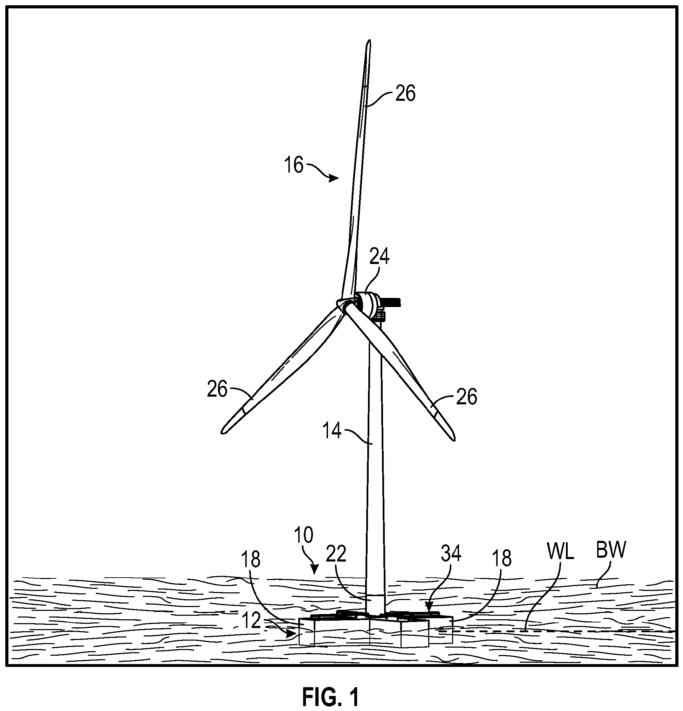

Referring to the drawings, particularly to Figs. 1 through 3, a first embodiment of a FOWT platform 10 having an improved tuned mass damper (TMD) system 34 is shown deployed in a body of water BW and anchored to the seabed (not shown). The illustrated FOWT platform 10 is one embodiment of a barge type platform and includes a foundation or hull 12 that supports a tower 14. The tower 14 supports a wind turbine 16. The hull 12 is semi-submersible, and is structured and configured to float, semi-submerged, in the body of water BW. Accordingly, a portion of the hull 12 will be above water when the hull 12 is floating in the body of water BW. As shown, a portion of the hull 12 is below the waterline WL. As used herein, the waterline WL is defined as the approximate line where the surface of the water meets the FOWT platform 10. Conventional mooring lines (not shown) may be attached to the FOWT platform 10 and further attached to anchors (not shown) in the seabed (not shown) to limit to movement of the FOWT platform 10 on the body of water BW.

As shown in the illustrated embodiment, the hull 12 is formed from four hull legs 18 that extend radially outwardly from a keystone 20 and provide buoyancy. The hull 12 is thus substantially cross-shaped. An interior or center column 22 is mounted to the keystone 20, and provides a platform upon which the tower 14 is mounted. Alternatively, the hull 12 may include three hull legs 18 or more than four hull legs 18. In the illustrated embodiment, the hull legs 18 have a length within the range of about 10 m to about 75 m depending on the size of commercial wind turbine installed.

Although the hull 12 of the barge type FOWT platform 10 is cross shaped, it will be understood that the improved TMD system 34 may be used in barge type platforms having other hull shapes, including but not limited to hulls having rectangular, square, round, oval, and other geometric shapes.

In the embodiments illustrated herein, the wind turbine 16 is a horizontal-axis wind turbine. Alternatively, the wind turbine may be a conventional vertical-axis wind turbine (not shown). The size of the turbine 16 will vary based on the wind conditions at the location where the FOWT platform 10 is anchored and the desired power output. For example, the turbine 16 may have an output of about 10 MW. Alternatively, the turbine 16 may have an output within the range of from about 1 MW to about 20 MW.

The wind turbine 16 may be conventional and may include a rotatable hub 24. At least one rotor blade 26 is coupled to and extends outward from the hub 24. The hub 24 is rotatably coupled to an electric generator (not shown). The electric generator may be coupled via a transformer (not shown) and an underwater power cable (not shown) to a power grid (not shown). In the illustrated embodiment, the hub 24 has three rotor blades 26. In other embodiments, the hub 24 may have more or less than three rotor blades 26.

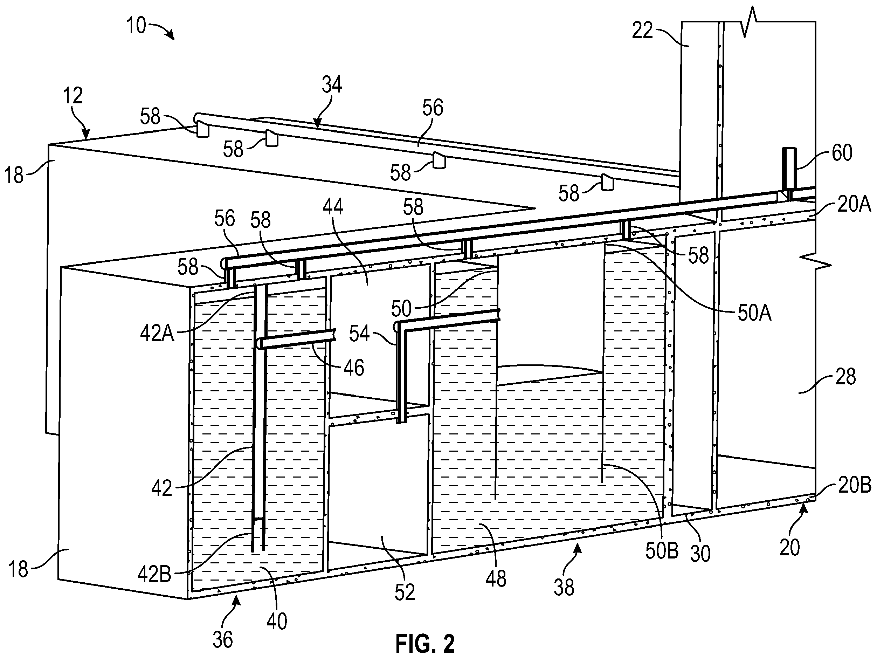

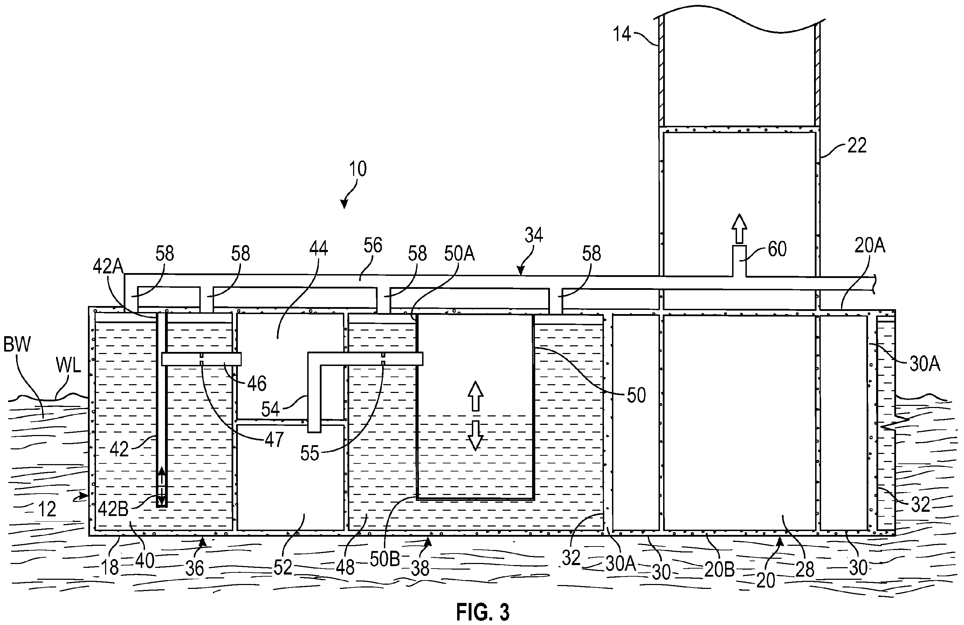

As shown in Figs. 2 and 3, the keystone 20 includes an upper wall 20A defining an upper surface, a lower wall 20B, and further defines a central cavity 28 with four radially outwardly extending keystone legs 30. Each leg 30 includes an end wall 30A defining a substantially vertical connection face 32 to which the four hull legs 18 will be attached. Alternatively, the keystone 20 may include three keystone legs 30 or more than four keystone legs 30, corresponding with the number of hull legs 18.

A conventional TMD is a mechanism integrated with a dynamic body that uses an internal or external mass and is linked to the dynamic body via a spring and a damper. The damper is used to reduce unwanted responses in the dynamic body by setting the damper to respond out of phase and at the frequency of the unwanted response, a procedure typically referred to as a tuned mass damping. The natural frequency of the TMD may be tuned by selecting a combination of mass and stiffness for the connection between the damper and the dynamic body. The phase of the damper may be tuned by adjusting the damping in the linkage between the mass damper and the dynamic body. Advantageously, the embodiments of the TMD described and illustrated herein use existing water in water ballast chambers in the hull, for example in the hull legs 18 or water external to the hull legs 18, as the mass, pressurized air as the spring, and an orifice configured for tuned damping.

The improved TMD system 34, illustrated in Figs. 1 through 3, includes a first or low frequency TMD 36 and a second or high frequency TMD 38. The low frequency TMD 36 is formed at an outboard end of each of the hull legs 18 and includes a first water ballast chamber 40 having a centrally located and longitudinally extending first damper pipe 42 extending from an upper end of the first water ballast chamber 40 toward a lower end of the first water ballast chamber 40, but terminating above a floor of the first water ballast chamber 40. The first damper pipe 42 may have a diameter within the range of about 1 m to about 20 m, a closed first end 42A (the upper end when viewing Figs. 2 and 3), and an open second end 42B (the lower end when viewing Figs. 2 and 3). A low frequency pressure chamber 44 is located in the hull leg 18. In the illustrated embodiment, the low frequency pressure chamber 44 is located adjacent the first water ballast chamber 40. Alternatively, the low frequency pressure chamber 44 may be located at other desired locations in the hull leg 18. A first connecting pipe 46 extends between the low frequency pressure chamber 44 and an upper portion of the first damper pipe 42.

Similarly, the high frequency TMD 38 is formed at an inboard end of each of the hull legs 18 and includes a second water ballast chamber 48 having a centrally located and longitudinally extending second damper pipe 50 extending from an upper end of the toward a lower end of the second water ballast chamber 48, but terminating above a floor of the second water ballast chamber 48. The second damper pipe 50 may have a diameter significantly larger than the diameter of the first damper pipe 42, such as within the range of about 1 m to about 20 m, a closed first end 50A (the upper end when viewing Figs. 2 and 3), and an open second end 50B (the lower end when viewing Figs. 2 and 3). A high frequency pressure chamber 52 is also located in the hull leg 18. In the illustrated embodiment, the high frequency pressure chamber 52 is located adjacent the second water ballast chamber 48 and below the first water ballast chamber 40. Alternatively, the high frequency pressure chamber 52 may be located at other desired locations in the hull leg 18. A second connecting pipe 54 extends between the high frequency pressure chamber 52 and an upper portion of the second damper pipe 50.

A ventilation pipe 56 is mounted to an upper, outside surface of each hull leg 18. Each ventilation pipe 56 has a plurality of connecting ventilation pipes 58 connecting each of the first water chambers 40 and the second water chambers 48, and each ventilation pipe 56 terminates at an open end thereof within the center column 22. In the illustrated embodiment, two connecting ventilation pipes 58 are connected to, and in communication with, each of the first water chambers 40 and the second water chambers 48. Inboard ends of the ventilation pipes 56 are connected to a central vent hub 60 within the center column 22. The ventilation pipes 56 and connecting ventilation pipes 58 vent each of the first water chambers 40 and the second water chambers 48 to the atmosphere.

Air pressure within the low frequency pressure chamber 44 and the high frequency pressure chamber 52 may be within the range of about 1.0 psi to about 50.0 psi, although preferably, the air pressure within the high frequency pressure chamber 52 is greater than the air pressure within the low frequency pressure chamber 44. The air pressure within each of the low frequency pressure chamber 44 and the high frequency pressure chamber 52 is customizable, and may be set and changed by an air compressor (not shown) within the FOWT platform 10.

The first water chambers 40 and the second water chambers 48 may be in fluid communication with a ballast pump (not shown) or other means for pumping or moving water, thus allowing the first water chambers 40 and the second water chambers 48 to be filled with water, and for the volume of water therein to be changed as required.

The first connecting pipe 46 and the second connecting pipe 54 may be provided with adjustable orifices, schematically illustrated at 47 and 55, respectively, within each of the first connecting pipe 46 and the second connecting pipe 54. Inside diameters of the adjustable orifices 47 and 55 may adjusted as required, i.e., either made larger or smaller, for active control of the flow of pressurized air from the low frequency pressure chamber 44 to the first damper pipe 42, and from the high frequency pressure chamber 52 to the second damper pipe 50. The adjustable orifices 47 and 55 may be manually or remotely adjusted. Thus, a desired frequency may be maintained within the low frequency TMD 36 and the high frequency TMD 38. For example, the frequency within the low frequency pressure chamber 44 and the high frequency pressure chamber 52 is preferably within the range of about .03 Hz to about .33 Hz. Preferably, a frequency of the high frequency TMD 38 is greater than a frequency of the low frequency TMD 36. Thus the damping characteristics of the high frequency TMD 38 and the low frequency TMD 36 may be controlled and adjusted by changing the rate of air flow through the second connecting pipe 54 and the first connecting pipe 46, respectively.

More specifically, the TMDs 36 and 38 may each be actively controlled to mitigate the adverse effects of FOWT platform motion and loading resulting from wind, current, and wave loading during operation over a range of frequencies.

For example, the TMD system 34 may be provided with a controller mounted at any desired location in the FOWT platform 10. Preferably, a controller provided as a component of the wind turbine 16 is used as the TMD 34 controller. It will be understood however, that the controller used to control operation of the TMD system 34 may be independent of the wind turbine 16 controller.

Referring again to Fig. 3, the adjustable orifices 47 and 55 may be equipped with a sensor, such as a position sensor, configured to sense the size of the orifices 47 and 55 during operation, and communicate the sensed position to the controller. Alternatively, other types of sensors may be used, including but not limited to a fluid flow sensor to measure fluid flow through the orifices 47 and 55 during operation, and communicate the sensed fluid flow to the controller. Each of the low frequency pressure chamber 44 and the high frequency pressure chamber 52 may be equipped with a pressure sensor configured to sense the air pressure in the pressure chambers 44 and 52 during operation, and communicate the sensed pressures to the controller.

Further, the hull 12 may include an array of sensors configured to sense a change of sea state and communicate the sensed sea state change to the controller. Examples of sea state sensors that may be provided on the hull 12 include, but are not limited to accelerometers, inclinometers and other angular position sensors, and load cells. Data from this array of sea state change sensors is communicated to the controller. An algorithm within the controller analyzes the data received and then: (1) changes a stiffness of the TMDs 36 and 38 by changing the air pressure in the pressure chambers 44 and 52, respectively, and/or (2) changes a damping frequency of the TMDs 36 and 38 by changing the size of the orifices 47 and 55, respectively, thus changing a volume of air flow through the first connecting pipe 46 and the second connecting pipe 54.

In operation, each of the low frequency TMD 36 and the high frequency TMD 38 may be tuned based on the geometry of the FOWT hull and the desired frequencies for which it is desirable to mitigate. Advantageously, the TMD system 34 of the FOWT platform 10 may be used to mitigate motions at two or more frequencies. As best shown in Fig. 3, a desired air pressure may be established in the low frequency pressure chamber 44 of the low frequency TMD 36. This desired air pressure will be communicated to the first damper pipe 42 via the first connecting pipe 46 and thus determines a level of water within the first damper pipe 42. The water in the first damper pipe 42 urges against the pressurized air in the first damper pipe 42, and thus acts like a spring. Because the low frequency TMD 36 is formed at an outboard end of each of the hull legs 18, and is oriented vertically, it provides greater leverage and is more effective to mitigate heeling, or the reduction of rotational movement of the hull 12.

Similarly, a desired air pressure may be established in the high frequency pressure chamber 52 of the high frequency TMD 38. This desired air pressure will be communicated to the second damper pipe 50 via the second connecting pipe 54 and thus determines a level of water within the second damper pipe 50. The water in the second damper pipe 50 urges against the pressurized air in the second damper pipe 50, and thus acts like a spring. Because the high frequency TMD 38 is formed at an inboard end of each of the hull legs 18, and is oriented vertically, it is more effective to mitigate up and down motion, i.e., vertical motion of the hull 12.

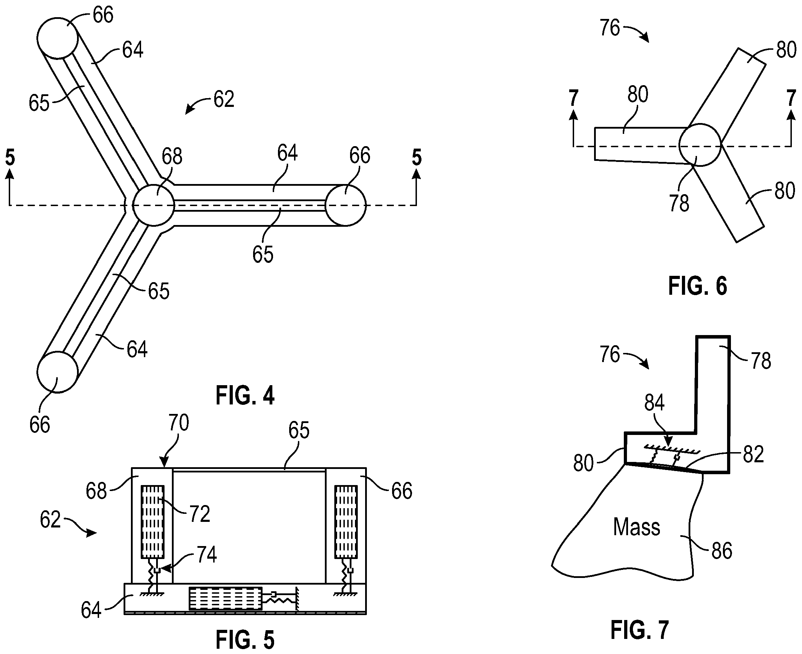

Figs. 4 and 5 illustrate a semi-submersible FOWT platform 62 having a second embodiment of the improved TMD system, shown schematically at 70. The semi-submersible FOWT platform 62 includes three buoyant beams 64, a vertical outer column 66 at an outboard end of each of the beams 64 and a vertical center column 68 at a center of the FOWT platform 62. Upper beams 65 may extend between an upper end of the center column 68 and an upper end of each of the outer columns 66. As illustrated in Fig. 5, the TMD system 70 includes a water chamber 72 and a pressure chamber having an orifice damper 74. In the illustrated embodiment, each of the beams 64 has a horizontally oriented TMD system 70 therein, and each of the columns, 66 and 68 has a vertically oriented TMD system 70 therein.

Figs. 6 and 7 illustrated a tension leg FOWT platform 76 having a third embodiment of the improved TMD system, shown schematically at 84. The tension leg FOWT platform 76 includes three buoyant beams 80, and a vertical center column 78 at a center of the FOWT platform 76. A flexible and water impermeable diaphragm 82 is formed in a lower surface of each beam 80 and is in contact with water 86 in which the tension leg FOWT platform 76 is deployed. As illustrated in Fig. 7, the TMD system 84 includes the diaphragm 82 and a pressure chamber having an orifice damper 84. In lieu of a water chamber, the water 86 acting against the diaphragm 82 functions as the mass for the TMD 84. The diaphragm 82 is movable in response to air pressure in the pressure chamber 84. In the illustrated embodiment, each of the beams 80 has a vertically oriented TMD system 84 therein.

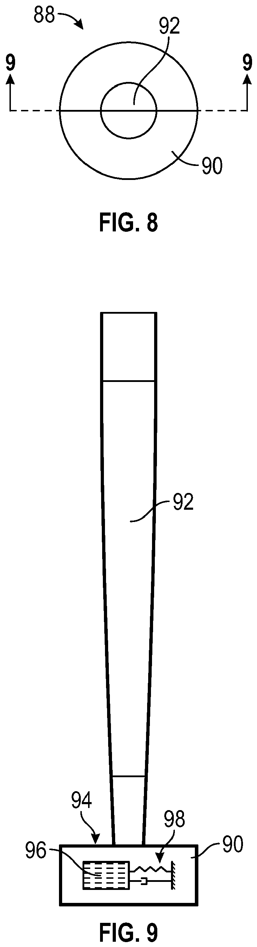

Figs. 8 and 9 illustrate a spar type FOWT platform 86 having a fourth embodiment of the improved TMD system, shown schematically at 94. The spar type FOWT platform 86 includes a base 90 and a vertical mast 92 extending outwardly and upwardly therefrom. As illustrated in Fig. 9, the TMD system 94 is substantially the same as the TMD system 70 and includes a water chamber 96 and a pressure chamber having an orifice damper 98. In the illustrated embodiment, TMD system 94 is horizontally oriented within the base 90.

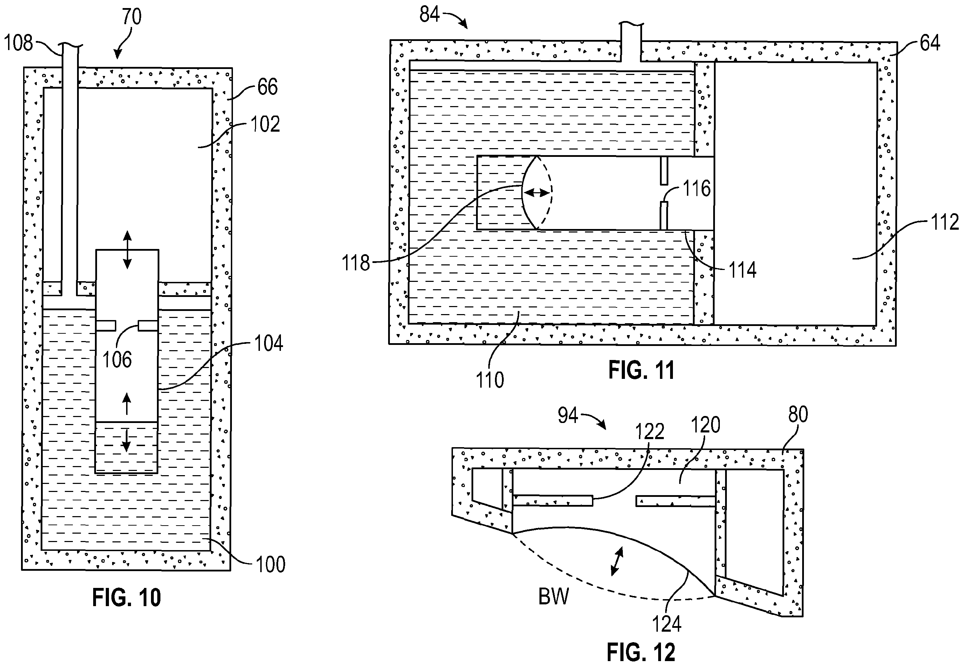

Referring now to Fig. 10, one example of the TMD system 70 is shown. The TMD system 70 is shown within a vertical outer column 66. It will be understood however, that the TMD system 70 may be formed in any of the beams 64 and the vertical center column 68. The TMD system 70 includes a ballast water chamber 100 and pressure chamber 102. A damper pipe 104 extends between the ballast water chamber 100 and the pressure chamber 102 and has an orifice defining an orifice damper 106 formed therein for controlling an amount of pressurized air within the damper pipe 104. The damper pipe 104 may have a diameter within the range of about 1 m to about 20 m.

A ventilation pipe 108 extends between the ballast water chamber 100 and the atmosphere outside of the column 66, thus venting the ballast water chamber 100 with atmosphere.

Referring now to Fig. 11, one example of the TMD system 84 is shown. The TMD system 84 is shown within a horizontal beam 64 of the semi-submersible FOWT platform 62. It will be understood however, that the TMD system 84 may also be formed in the base 90 of the TMD system 94. The TMD system 84 includes a ballast water chamber 110 and pressure chamber 112. A damper pipe 114 extends between the ballast water chamber 110 and the pressure chamber 112 and has an orifice defining an orifice damper 116 formed in a first end thereof (the right-most end when viewing Fig. 11) for controlling an amount of pressurized air within the damper pipe 114. A flexible and water impermeable diaphragm 118 is formed in the damper pipe 114 near a second end thereof (the left-most end when viewing Fig. 11). The diaphragm 118 is movable against a force exerted by the water in the damper pipe 114 in response to air pressure in the damper pipe 114. The damper pipe 114 may have a diameter within the range of about 1 m to about 20 m.

Referring now to Fig. 12, one example of the TMD system 94 is shown. The TMD system 94 is shown within a beam 80 of the tension leg FOWT platform 76. The TMD system 94 includes pressure chamber 120 having an orifice defining an orifice damper 122 formed therein controlling an amount of pressurized air within the pressure chamber 120. A flexible and water impermeable diaphragm 124 is formed one end of the pressure chamber 120 and separates the pressure chamber 120 from the water outside of the beam 80. The diaphragm 124 is movable against a force exerted by the water in the body of water BW in response to air pressure in the pressure chamber 120.

Although described in the context of a tension leg FOWT platform, the TMD system 94 described herein may be configured to be used with any of the embodiments of the FOWT platforms described and illustrated herein.

Advantageously, any embodiment of the TMD system 34 described and illustrated herein may be used in targeting design-driving FOWT platform responses and characteristics that include, but are not limited to: (1) system heel angle, wherein the TMD system's dynamic heel angle is a typical design-driving criteria that impacts the robustness of the structural design in not only FOWTs, but floating offshore platforms in general. Implementing mass damper technologies, such as the TMD system 34 into the hull of a FOWT platform has been shown to decrease dynamic heel motion. Reduction in heel motion correlates with a reduction in both fatigue and ultimate loads for various structural components in the hull 12, the tower 14, and the wind turbine 16 mounted thereon; (2) system heave motion, wherein the use of a TMD in a FOWT platform will reduce the response to heave (vertical) motion of the platform. This may allow FOWT hulls to be designed with less concern with the turbine and environmental loading frequencies; (3) turbine harmonic forcing, wherein fatigue damage due to turbine harmonic loads associated with blade rotation is a prominent consideration in a wind turbine tower's design. Because such fatigue occurs at known frequencies, a TMD may be used for load mitigation and therefore improved fatigue performance, and (4) responses due to the wave environment, wherein TMDs within a FOWT platform hull may be set to target a wave frequency response and thus may mitigate dynamic and structural responses associated with waves.

The principle and mode of operation of this invention have been explained and illustrated. However, it must be understood that this invention may be practiced otherwise than as specifically explained and illustrated without departing from the scope of the following claims.

## Claims

1. A tuned mass damper (TMD) system (34) in combination with a floating offshore wind turbine (FOWT) platform (10) comprising:
a FOWT platform (10) having a center (20), at least three legs (18) extending radially from the center, and configured to have a wind turbine tower mounted thereon;
a TMD system (34), a portion of which is mounted in each of the legs (18), each leg (18) having:
a first TMD (36) at an outboard end of each leg (18) and configured to operate at a first frequency; and
a second TMD (38) at an inboard end of each leg (18) configured to operate at a second frequency different than the first frequency;
**characterized in that**:
the first TMD (36) includes:
a first water ballast chamber (40) that defines a mass of the first TMD (36);
a first pressure chamber (44) within each leg (18) connected to a source of pressurized air and a having an air pressure greater than atmospheric pressure;
a first damper pipe (42) having a closed first end (42A) and an open second end (42B), the first end attached to an upper end of the first water ballast chamber (40), the first damper pipe (42) extending toward a floor of the first water ballast chamber (40), such that the second end (42B) is spaced a distance apart from the floor of the first water ballast chamber (40); and
a first connecting pipe (46) extending between the first pressure chamber (44) and an upper portion of the first damper pipe (42), the first connecting pipe (46) configured for the flow of pressurized air therethrough; and
the second TMD (38) includes:
a second water ballast chamber (48) that defines a mass of the second TMD (38);
a second pressure chamber (52) within each leg (18) connected to a source of pressurized air and a having an air pressure greater than an air pressure within the first pressure chamber (44);
a second damper pipe (50) having a closed first end (50A) and an open second end (50B), the first end attached to an upper end of the second water ballast chamber (48), the second damper pipe (50) extending toward a floor of the second water ballast chamber (48), such that the second end (50B) is spaced a distance apart from the floor of the second water ballast chamber (48); and
a second connecting pipe (54) extending between the second pressure chamber (52) and an upper portion of the second damper pipe (50), the second connecting pipe (54) configured for the flow of pressurized air therethrough;
wherein the first connecting pipe (46) and the second connecting pipe (54) include an adjustable orifice (47, 55), and wherein an inside diameter of the adjustable orifices (47, 55) is adjustable for active control of the flow of pressurized air from the first pressure chamber (44) and the second pressure chamber (52), respectively.

2. The TMD system (34) in combination with a FOWT platform (10) according to Claim 1, wherein at least one of the first and second TMDs (36, 38) is configured to mitigate at least one of heave motion, heel motion, turbine harmonic loading, and wave environment loading of the FOWT platform (10).

3. The TMD system (34) in combination with a FOWT platform (10) according to Claim 1, wherein at least one of the first and second TMDs (36, 38) is configured to allow the FOWT platform (10) to effectively operate with rigid body heave and heel natural frequencies within its intended wave energy range.

4. The TMD system (34) in combination with a FOWT platform (10) according to Claim 1, wherein the FOWT platform (10) is a barge type platform (10) having a hull (12) comprising a keystone and four legs (18) attached thereto and defining a cross shape.

5. The TMD system (34) in combination with a FOWT platform (10) according to Claim 4, wherein at least one of the first and second TMDs (36, 38) is configured to mitigate at least one of heave motion, heel motion, turbine harmonic loading, and wave environment loading of the FOWT platform (10).

6. The TMD system (34) in combination with a FOWT platform (10) according to Claim 5, wherein at least one of the first and second TMDs (36, 38) is configured to allow the FOWT platform (10) to effectively operate with rigid body heave and heel natural frequencies within its intended wave energy range.

7. The TMD system (34) in combination with a FOWT platform (10) according to Claim 1, wherein the TMD system (34) further includes:
a controller attached to the FOWT platform (10);
a sea state sensor mounted to the FOWT platform (10) and operatively connected to the controller;
a position sensor connected to each of the adjustable orifices (47, 55) within the first and the second connecting pipes (46, 54), and operatively connected to the controller; and
a pressure sensor connected to each of the first and the second pressure chambers (44, 52) and operatively connected to the controller;
wherein the controller is configured to actively control an operating frequency of the first and second TMDs (36, 38) based on input from the sea state sensor.

8. The TMD system (34) in combination with a FOWT platform (10) according to Claim 7, wherein active control of the operating frequency of the first and second TMDs (36, 38) includes at least one of changing a stiffness of the first and second TMDs (36, 38) by changing the air pressure in the first and second pressure chambers (44, 52), respectively, and changing a damping frequency of the first and second TMDs (36, 38) by changing the size of the adjustable orifices within the first and second connecting pipes (46, 54), thus changing a volume of air flow through the first and second connecting pipes (46, 54).

9. The TMD system (34) in combination with a FOWT platform (10) according to Claim 1, wherein the first pressure chamber (44) is configured as a low frequency pressure chamber and the second pressure chamber (52) is configured as a high frequency pressure chamber.

10. The TMD system (34) in combination with a FOWT platform (10) according to Claim 9, wherein the first TMD (36) is configured to at least one of mitigate heeling and reduce rotational movement of the hull (12).

11. The TMD system (34) in combination with a FOWT platform (10) according to Claim 10, wherein the second TMD (38) is configured to mitigate up and down motion vertical motion of the hull (12).

## Patentansprüche

1. Abgestimmtes Massendämpfer(TMD)-System (34) in Kombination mit einer schwimmenden Offshore-Windturbinen(FOWT)-Plattform (10), umfassend:
eine FOWT-Plattform (10), die eine Mitte (20), mindestens drei Beine (18), die sich radial von der Mitte erstrecken, aufweist und dazu konfiguriert ist, einen darauf montierten Windkraftanlagenturm aufzuweisen;
ein TMD-System (34), von dem ein Abschnitt in jedem der Beine (18) montiert ist, wobei jedes Bein (18) Folgendes aufweist:
einen ersten TMD (36) an einem äußeren Ende jedes Beins (18) und dazu konfiguriert, bei einer ersten Frequenz zu arbeiten; und einen zweiten TMD (38) an einem inneren Ende jedes Beins (18), der dazu konfiguriert ist, bei einer zweiten Frequenz zu arbeiten, die sich von der ersten Frequenz unterscheidet;
**dadurch gekennzeichnet, dass**:
der erste TMD (36) Folgendes beinhaltet:
eine erste Wasserballastkammer (40), die eine Masse des ersten TMD (36) definiert;
eine erste Druckkammer (44) innerhalb jedes Beins (18), die mit einer Druckluftquelle verbunden ist und einen Luftdruck aufweist, der größer als der Atmosphärendruck ist;
ein erstes Dämpferrohr (42), das ein geschlossenes erstes Ende (42A) und ein offenen zweites Ende (42B) aufweist, wobei das erste Ende an einem oberen Ende der ersten Wasserballastkammer (40) angebracht ist, wobei sich das erste Dämpferrohr (42) zu einem Boden der ersten Wasserballastkammer (40) erstreckt, sodass das zweite Ende (42B) von dem Boden der ersten Wasserballastkammer (40) um einen Abstand beabstandet ist; und
ein erstes Verbindungsrohr (46), das sich zwischen der ersten Druckkammer (44) und einem oberen Abschnitt des ersten Dämpferrohrs (42) erstreckt, wobei das erste Verbindungsrohr (46) zum Hindurchströmen von Druckluft konfiguriert ist; und der zweite TMD (38) Folgendes beinhaltet:
eine zweite Wasserballastkammer (48), die eine Masse des zweiten TMD (38) definiert;
eine zweite Druckkammer (52) innerhalb jedes Beins (18), die mit einer Druckluftquelle verbunden ist und einen Luftdruck aufweist, der größer ist als ein Luftdruck innerhalb der ersten Druckkammer (44);
ein zweites Dämpferrohr (50), das ein geschlossenes erstes Ende (50A) und ein offenes zweites Ende (50B) aufweist, wobei das erste Ende an einem oberen Ende der zweiten Wasserballastkammer (48) angebracht ist, wobei sich das zweite Dämpferrohr (50) zu einem Boden der zweiten Wasserballastkammer (48) erstreckt, sodass das zweite Ende (50B) von dem Boden der zweiten Wasserballastkammer (48) um einen Abstand beabstandet ist; und ein zweites Verbindungsrohr (54), das sich zwischen der zweiten Druckkammer (52) und einem oberen Abschnitt des zweiten Dämpferrohrs (50) erstreckt, wobei das zweite Verbindungsrohr (54) zum Hindurchströmen von Druckluft konfiguriert ist;
wobei das erste Verbindungsrohr (46) und das zweite Verbindungsrohr (54) eine einstellbare Öffnung (47, 55) beinhalten, und wobei ein Innendurchmesser der einstellbaren Öffnungen (47, 55) zur aktiven Steuerung des Druckluftstroms aus der ersten Druckkammer (44) bzw. der zweiten Druckkammer (52) einstellbar ist.

2. TMD-System (34) in Kombination mit einer FOWT-Plattform (10) nach Anspruch 1, wobei mindestens einer von dem ersten und dem zweiten TMD (36, 38) dazu konfiguriert ist, mindestens eines von einer Hebungsbewegung, einer Krängungsbewegung, einer Oberschwingungsbelastung der Turbine und einer Wellenumgebungsbelastung der FOWT-Plattform (10) abzuschwächen.

3. TMD-System (34) in Kombination mit einer FOWT-Plattform (10) nach Anspruch 1, wobei mindestens einer von dem ersten und dem zweiten TMD (36, 38) dazu konfiguriert ist, der FOWT-Plattform (10) zu ermöglichen, effektiv mit natürlichen Frequenzen von Starrkörperhebung und -krängung innerhalb ihres beabsichtigten Wellenenergiebereichs zu arbeiten.

4. TMD-System (34) in Kombination mit einer FOWT-Plattform (10) nach Anspruch 1, wobei die FOWT-Plattform (10) eine lastkahnartige Plattform (10) ist, die einen Rumpf (12) aufweist, der einen Schlussstein und vier daran angebrachte Beine (18) umfasst und eine Kreuzform definiert.

5. TMD-System (34) in Kombination mit einer FOWT-Plattform (10) nach Anspruch 4, wobei mindestens einer von dem ersten und dem zweiten TMD (36, 38) dazu konfiguriert ist, mindestens eines von einer Hebungsbewegung, einer Krängungsbewegung, einer Oberschwingungsbelastung der Turbine und einer Wellenumgebungsbelastung der FOWT-Plattform (10) abzuschwächen.

6. TMD-System (34) in Kombination mit einer FOWT-Plattform (10) nach Anspruch 5, wobei mindestens einer von dem ersten und dem zweiten TMD (36, 38) dazu konfiguriert ist, der FOWT-Plattform (10) zu ermöglichen, effektiv mit natürlichen Frequenzen von Starrkörperhebung und -krängung innerhalb ihres beabsichtigten Wellenenergiebereichs zu arbeiten.

7. TMD-System (34) in Kombination mit einer FOWT-Plattform (10) nach Anspruch 1, wobei das TMD-System (34) ferner umfasst:
eine Steuerung, die an der FOWT-Plattform (10) angebracht ist;
einen Seegangssensor, der an der FOWT-Plattform (10) montiert und mit der Steuerung wirkverbunden ist;
einen Positionssensor, der mit jeder der einstellbaren Öffnungen (47, 55) innerhalb des ersten und des zweiten Verbindungsrohrs (46, 54) verbunden ist und mit der Steuerung wirkverbunden ist; und
einen Drucksensor, der sowohl mit der ersten als auch mit der zweiten Druckkammer (44, 52) verbunden und mit der Steuerung wirkverbunden ist;
wobei die Steuerung dazu konfiguriert ist, eine Betriebsfrequenz des ersten und des zweiten TMD (36, 38) auf Grundlage einer Eingabe von dem Seegangssensor aktiv zu steuern.

8. TMD-System (34) in Kombination mit einer FOWT-Plattform (10) nach Anspruch 7, wobei das aktive Steuern der Betriebsfrequenz des ersten und des zweiten TMD (36, 38) mindestens eines von Ändern einer Steifigkeit des ersten und des zweiten TMD (36, 38) durch Ändern des Luftdrucks in der ersten bzw. zweiten Druckkammer (44, 52) und Ändern einer Dämpfungsfrequenz des ersten und des zweiten TMD (36, 38) durch Ändern der Größe der einstellbaren Öffnungen innerhalb des ersten und des zweiten Verbindungsrohrs (46, 54) umfasst, wodurch ein Luftstromvolumen durch das erste und das zweite Verbindungsrohr (46, 54) geändert wird.

9. TMD-System (34) in Kombination mit einer FOWT-Plattform (10) nach Anspruch 1, wobei die erste Druckkammer (44) als eine Niederfrequenzdruckkammer konfiguriert ist und die zweite Druckkammer (52) als eine Hochfrequenzdruckkammer konfiguriert ist.

10. TMD-System (34) in Kombination mit einer FOWT-Plattform (10) nach Anspruch 9, wobei der erste TMD (36) dazu konfiguriert ist, Krängung zu mindern und/oder eine Drehbewegung des Rumpfes (12) zu reduzieren.

11. TMD-System (34) in Kombination mit einer FOWT-Plattform (10) nach Anspruch 10, wobei der zweite TMD (38) dazu konfiguriert ist, die vertikale Aufwärts- und Abwärtsbewegung des Rumpfs (12) abzuschwächen.

## Revendications

1. Système (34) d'amortisseur de masse accordé (TMD) en combinaison avec une plate-forme d'éolienne flottante en mer (FOWT) (10) comprenant :
une plate-forme FOWT (10) ayant un centre (20), au moins trois pieds (18) s'étendant radialement à partir du centre, et conçue pour avoir une tour d'éolienne montée dessus ;
un système TMD (34), dont une partie est montée dans chacun des pieds (18), chaque pied (18) ayant :
un premier TMD (36) à une extrémité extérieure de chaque pied (18) et configuré pour fonctionner à une première fréquence ; et
un second TMD (38) à une extrémité intérieure de chaque pied (18) configuré pour fonctionner à une seconde fréquence différente de la première fréquence ;
**caractérisé en ce que** :
le premier TMD (36) comporte :
une première chambre de lest d'eau (40) qui définit une masse du premier TMD (36) ;
une première chambre de pression (44) à l'intérieur de chaque pied (18) reliée à une source d'air sous pression et ayant une pression d'air supérieure à la pression atmosphérique ;
un premier tube amortisseur (42) ayant une première extrémité fermée (42A) et une seconde extrémité ouverte (42B), la première extrémité étant fixée à une extrémité supérieure de la première chambre de lest d'eau (40), le premier tube amortisseur (42) s'étendant vers un plancher de la première chambre de lest d'eau (40), de sorte que la seconde extrémité (42B) soit espacée d'une certaine distance du plancher de la première chambre de lest d'eau (40) ; et
un premier tube de raccordement (46) s'étendant entre la première chambre de pression (44) et une partie supérieure du premier tube amortisseur (42), le premier tube de raccordement (46) étant conçu pour l'écoulement d'air sous pression à travers celui-ci ; et
le second TMD (38) comporte :
une seconde chambre de lest d'eau (48) qui définit une masse du second TMD (38) ;
une seconde chambre de pression (52) à l'intérieur de chaque pied (18) reliée à une source d'air sous pression et ayant une pression d'air supérieure à une pression d'air à l'intérieur de la première chambre de pression (44) ;
un second tube amortisseur (50) ayant une première extrémité fermée (50A) et une seconde extrémité ouverte (50B), la première extrémité étant fixée à une extrémité supérieure de la seconde chambre de lest d'eau (48), le second tube amortisseur (50) s'étendant vers un plancher de la seconde chambre de lest d'eau (48), de sorte que la seconde extrémité (50B) soit espacée d'une certaine distance du plancher de la seconde chambre de lest d'eau (48) ; et
un second tube de raccordement (54) s'étendant entre la seconde chambre de pression (52) et une partie supérieure du second tube amortisseur (50), le second tube de raccordement (54) étant conçu pour l'écoulement d'air sous pression à travers celui-ci ; dans lequel le premier tube de raccordement (46) et le second tube de raccordement (54) comportent un orifice réglable (47, 55), et dans lequel un diamètre intérieur des orifices réglables (47, 55) est réglable pour un contrôle actif de l'écoulement d'air sous pression de la première chambre de pression (44) et de la seconde chambre de pression (52), respectivement.

2. Système TMD (34) en combinaison avec une plate-forme FOWT (10) selon la revendication 1, dans lequel au moins l'un des premier et second TMD (36, 38) est configuré pour atténuer au moins l'un parmi un mouvement de pilonnement, un mouvement de gîte, une charge harmonique de l'éolienne et une charge de l'environnement des vagues de la plate-forme FOWT (10).

3. Système TMD (34) en combinaison avec une plate-forme FOWT (10) selon la revendication 1, dans lequel au moins l'un des premier et second TMD (36, 38) est configuré pour permettre à la plate-forme FOWT (10) de fonctionner efficacement avec des fréquences naturelles de pilonnement et de gîte de corps rigide dans la plage d'énergie des vagues prévue de celle-ci.

4. Système TMD (34) en combinaison avec une plate-forme FOWT (10) selon la revendication 1, dans lequel la plate-forme FOWT (10) est une plate-forme de type péniche (10) ayant une coque (12) comprenant une pièce maîtresse et quatre pieds (18) fixés à celle-ci et définissant une forme de croix.

5. Système TMD (34) en combinaison avec une plate-forme FOWT (10) selon la revendication 4, dans lequel au moins l'un des premier et second TMD (36, 38) est configuré pour atténuer au moins l'un parmi un mouvement de pilonnement, un mouvement de gîte, une charge harmonique de l'éolienne et une charge de l'environnement des vagues de la plate-forme FOWT (10).

6. Système TMD (34) en combinaison avec une plate-forme FOWT (10) selon la revendication 5, dans lequel au moins l'un des premier et second TMD (36, 38) est configuré pour permettre à la plate-forme FOWT (10) de fonctionner efficacement avec des fréquences naturelles de pilonnement et de gîte de corps rigide dans la plage d'énergie des vagues prévue de celle-ci.

7. Système TMD (34) en combinaison avec une plate-forme FOWT (10) selon la revendication 1, dans lequel le système TMD (34) comporte en outre :
un contrôleur fixé à la plate-forme FOWT (10) ;
un capteur d'état de la mer monté sur la plate-forme FOWT (10) et relié de manière opérationnelle au contrôleur ;
un capteur de position relié à chacun des orifices réglables (47, 55) à l'intérieur des premier et second tubes de raccordement (46, 54), et relié de manière fonctionnelle au contrôleur ; et
un capteur de pression relié à chacune des première et seconde chambres de pression (44, 52) et relié de manière fonctionnelle au contrôleur ;
dans lequel le contrôleur est configuré pour contrôler activement une fréquence de fonctionnement des premier et second TMD (36, 38) sur la base d'une entrée provenant du capteur d'état de la mer.

8. Système TMD (34) en combinaison avec une plate-forme FOWT (10) selon la revendication 7, dans lequel le contrôle actif de la fréquence de fonctionnement des premier et second TMD (36, 38) comporte au moins l'un parmi le changement d'une rigidité des premier et second TMD (36, 38) en changeant la pression d'air dans les première et seconde chambres de pression (44, 52), respectivement, et le changement d'une fréquence d'amortissement des premier et second TMD (36, 38) en changeant la taille des orifices réglables à l'intérieur des premier et second tubes de raccordement (46, 54), changeant ainsi un volume d'écoulement d'air à travers les premier et second tubes de raccordement (46, 54).

9. Système TMD (34) en combinaison avec une plate-forme FOWT (10) selon la revendication 1, dans lequel la première chambre de pression (44) est conçue en tant que chambre de pression basse fréquence et la seconde chambre de pression (52) est conçue en tant que chambre de pression haute fréquence.

10. Système TMD (34) en combinaison avec une plate-forme FOWT (10) selon la revendication 9, dans lequel le premier TMD (36) est configuré pour au moins atténuer le gîte et réduire le mouvement de rotation de la coque (12).

11. Système TMD (34) en combinaison avec une plate-forme FOWT (10) selon la revendication 10, dans lequel le second TMD (38) est configuré pour atténuer le mouvement vertical de mouvement ascendant et descendant de la coque (12).
